# EUROPEAN PATENT APPLICATION

(11) **EP 2 181 948 A1**
(43) Date of publication of application: **05.05.2010**
(21) Application number: 08425693.2
(22) Date of filing: 29.10.2008
(51) Int. Cl.: B65G 47/84

(54) **Device for aligning pouches and similar**

(71) Applicant: Wild Parma S.r.l., 43044 Collecchio (PR) (IT)
(72) Inventor: Furlotti, Filippo, 43026 Traversetolo (Parma) (IT)
(74) Representative: Gotra, Stefano

(57) **Abstract**

Device (1) for aligning pouches and similar, comprising: a magazine (2) for the pouches; a rotary body (4) provided with at least one pocket (5) suitable for receiving and containing a pouch, said rotary body being mobile between a first operative position, in which the pocket abuts against the magazine to receive a pouch, and a second operative position, in which the pocket abuts against an external handling station, so that the pouch can be transferred to said handling station, said pocket (5) being configured so as to orient the pouch in a prefixed direction and plane; means (6) for transferring a pouch from the magazine (2) to a pocket (5) of the rotary body (4).

## Description

The present invention relates to a device for aligning pouches and similar.

More specifically, the present invention relates to the industrial sector concerning the packaging of food products in liquid, semi-liquid, powder or granular form inside flexible containers.

Typically, the flexible containers comprise a flexible pouch, usually made of polyethylene (PE), to which a "spout" is fixed to enable the product to be "squeezed" out of the pouch.

Generally speaking, the assembly of flexible containers takes place in the following manner.

Prior to filling, the spout is inserted into an upper opening of the pouch and is subsequently welded to lips of the pouch, disposed along the edge of said opening.

The flexible containers are generally assembled on rotary welding machines, also called welding starwheels, equipped with means for opening the pouch, inserting the spout inside the opening and welding the spout to the lips of said opening of the pouch.

In order to guarantee a continuous flow of pouches and spouts to the welding starwheel so that the flexible containers can be formed in a continuous mode, document WO2006030464 shows an apparatus comprising a handling unit designed to pick up a pouch and a spout from their respective magazines and feed them simultaneously to the welding starwheel.

In this context, a particularly felt and not yet resolved technical problem is represented by the difficulty in feeding the pouches to the handling unit in a precise manner. In fact, since the pouches are manually positioned on the magazine, it frequently occurs that, either due to haste or lack of experience, the operator disposes the pouches with a degree of alignment that is insufficient for the handling unit which picks up the pouches and feeds them to the welding starwheel.

In particular, it may be observed that in order for the pick-up operation to take place correctly each pouch must be fed in the proper orientation, i.e. it must be maintained in a substantially upright position, it must lie in a plane that is substantially orthogonal to the direction of feed of the pouches on the magazine, and it must be centred horizontally in relation to the pick-up zone of the handling unit.

At present, on the contrary, it may occur that two or more consecutive pouches, improperly "packed", arrive at the handling unit excessively inclined in relation to the vertical direction or not coplanar with said orthogonal plane or even not horizontally centred.

The incorrect alignment of the pouches on the magazine compromises the correct functioning of the handling unit, since the latter is able to perform efficiently only if the pouches are substantially coplanar with said plane orthogonal to the direction of feed of the pouches on the magazine and are not excessively inclined in relation to the vertical direction, or horizontally off centre.

The handling unit that picks up the pouches moves following a hypocycloid trajectory that has a cusp exactly at the point where the pouch is to be picked up. In this cusp point the relative speed between the handling unit and the pouch is equal to zero and this enables the handling unit to pick up the pouch without "wrenching" it from the magazine. However, though the magazine is arranged in such a way that the pouches are abutted at the cusp point, it is necessary that the pouch to be picked up at the front of the queue is substantially upright and horizontally centred and above all it is necessary for it to assume a position that is coplanar with said orthogonal plane.

In this context, the technical task at the basis of the present invention is to propose a device for aligning pouches and similar which can overcome the foregoing limitation of the prior art.

In particular, it is an object of the present invention to provide a device for aligning pouches and similar which is capable of picking up the pouches from the magazine, aligning them and feeding them with precision to the handling unit for subsequent conveyance to a welding station, whether it be a rotary starwheel or another apparatus.

Another object of the present invention is to propose a device for aligning pouches and similar which can be installed on already existing welding starwheels.

A further object of the present invention is to propose a device for aligning pouches and similar which is able to guarantee high productivity.

Another object of the present invention is to provide a device for aligning pouches and similar which is reliable and economical to produce.

The technical task and the objects specified are substantially achieved by means of a device for aligning pouches and similar which comprises the technical characteristics illustrated in one or more of the appended claims.

Further characteristics and advantages of the present invention will become more apparent from the following description of a preferred, but not exclusive, embodiment of a device for aligning flexible containers, illustrated solely by way of non-restrictive example in the appended drawings, in which:
- figure 1 illustrates an overall perspective view of a device for aligning pouches and similar according to the invention;
- figure 2 illustrates a perspective view from above of the device shown in figure 1;
- figure 3 illustrates a side perspective view of the device shown in the previous figures;
- figures 4 and 5 illustrate two perspective views of a first construction detail of the device shown in the previous figures, in particular a rotary body provided with a plurality of pockets to receive the pouches;
- figure 6 illustrates a perspective view of a second construction detail of the device;
- figures 7 to 10 illustrate a plurality of perspective views of the device with some parts removed in order to better show others;
- figures 11 and 12 illustrate two perspective views of two mechanical details of the device;
- figure 13 to 17 illustrate a plurality of layout and perspective views of further construction details of the rotary body shown in figures 4 and 5;
- figure 18 illustrates a further construction detail of the device shown in figure 1.

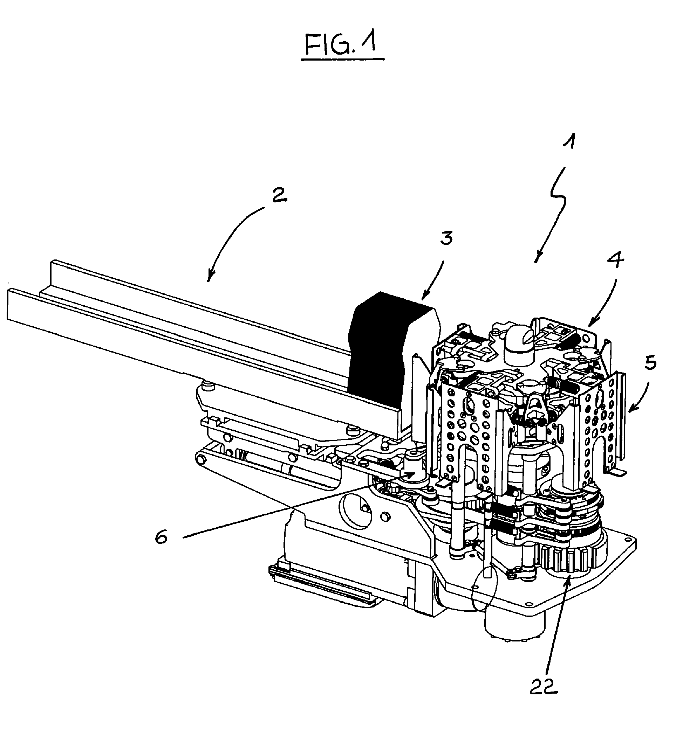

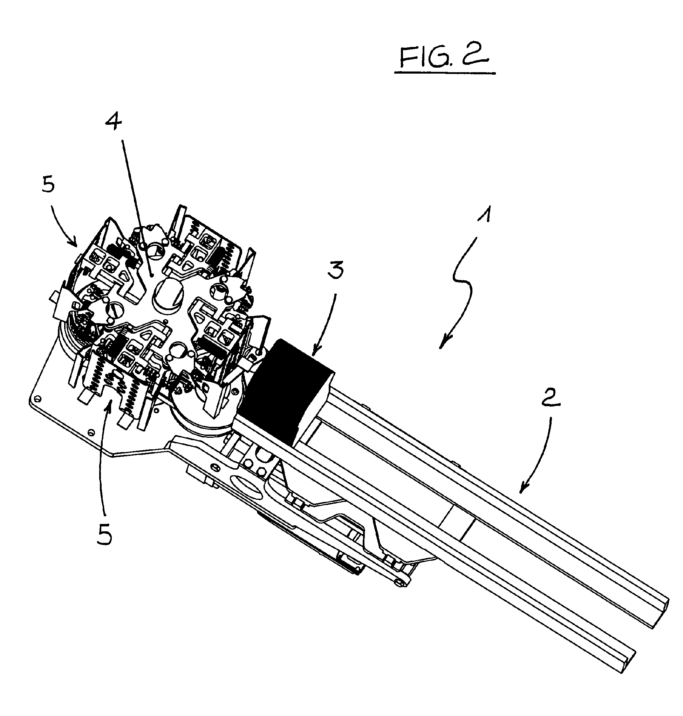

With reference to figures 1 to 3, a device for aligning pouches and similar is globally indicated with the number 1.

The device 1 comprises a magazine 2 for the pouches 3 and a rotary body 4 provided with at least one pocket 5 to receive a pouch.

The rotary body 4 is mobile between a first operative position, in which the pocket 5 abuts against the magazine 2, and a second operative position, in which the pocket abuts against an external processing station, so that the pouch can be fed to said station, typically a handling unit according to the described prior art.

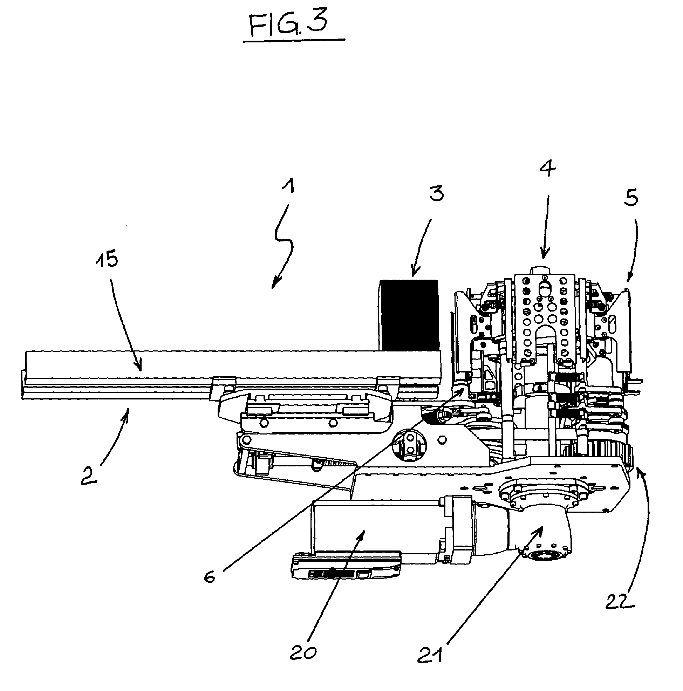

With particular reference to figures 1 and 3, the device 1 comprises means 6 for transferring a pouch from the magazine 2 to a pocket 5 of the rotary body 4. Preferably, said means for transferring a pouch are interposed between the magazine 2 and the rotary body 4.

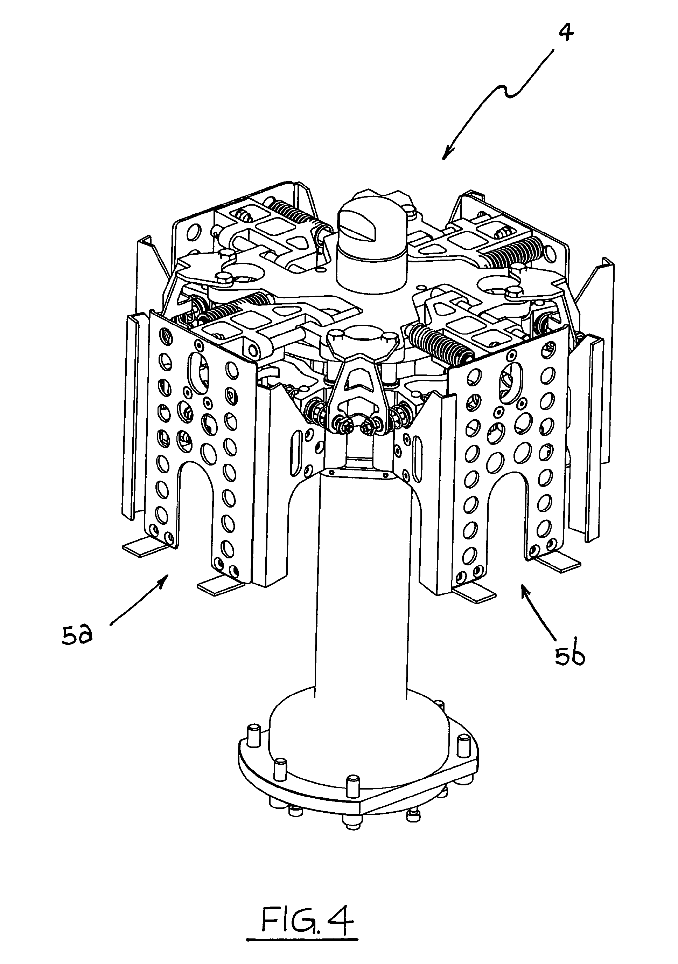

With reference to the preferred embodiment illustrated in figures 4, 5 and 6, the rotary body 4 comprises a carousel integrally keyed onto a support shaft 7 and provided with a plurality of pockets 5, preferably four, disposed in pairs in diametrically opposite positions relative to said support shaft. In particular, the pockets are disposed at an angular distance of around 90° from each other along the perimeter of the carousel.

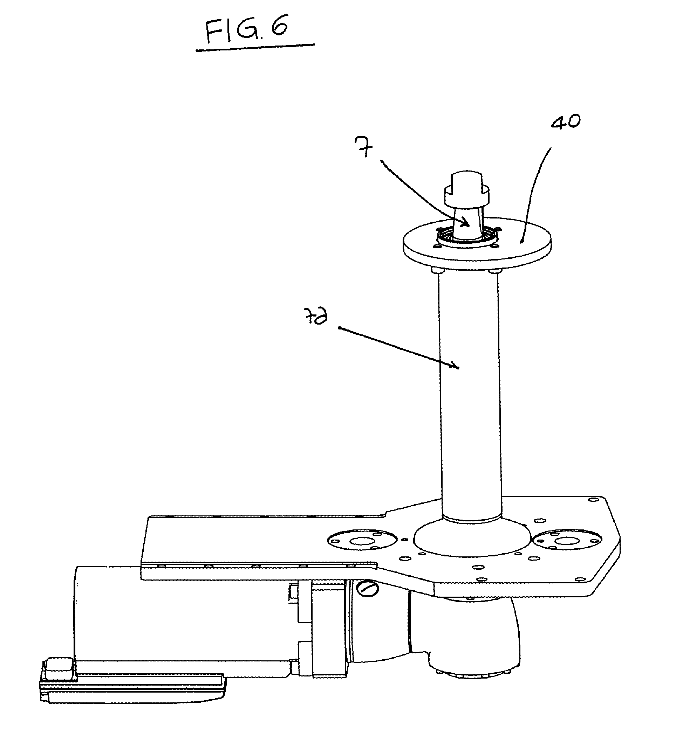

With particular reference to figure 6, the support shaft 7 is inserted into a special vertical housing 7a.

The pocket is defined by a plurality of walls designed to orient the pouch according to a prefixed direction and plane.

In particular, the pocket comprises at least one base wall, a rear wall and a pair of side walls.

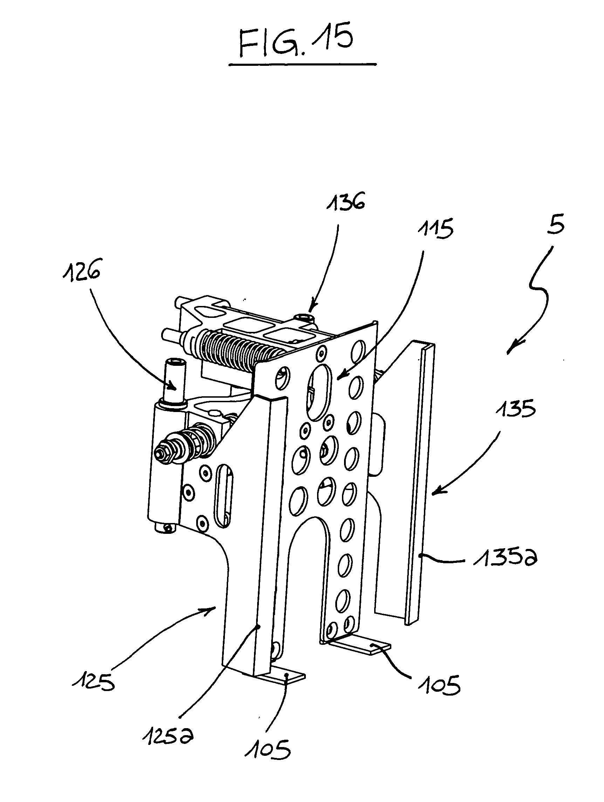

With particular reference to figures 15 to 17, the device 1 preferably comprises a pair of brackets 105 horizontally aligned so as to define an equal number of base walls.

The rear wall is formed by a plate 115, preferably perforated so as to reduce the overall weight of the pocket.

In the preferred embodiment, the side walls are formed by a pair of flaps 125 and 135 mobile between an operative configuration for opening the pocket, in which they position themselves away from the base and rear walls, and an operative configuration for closing the pocket, in which they abut in the vicinity of the base and rear walls.

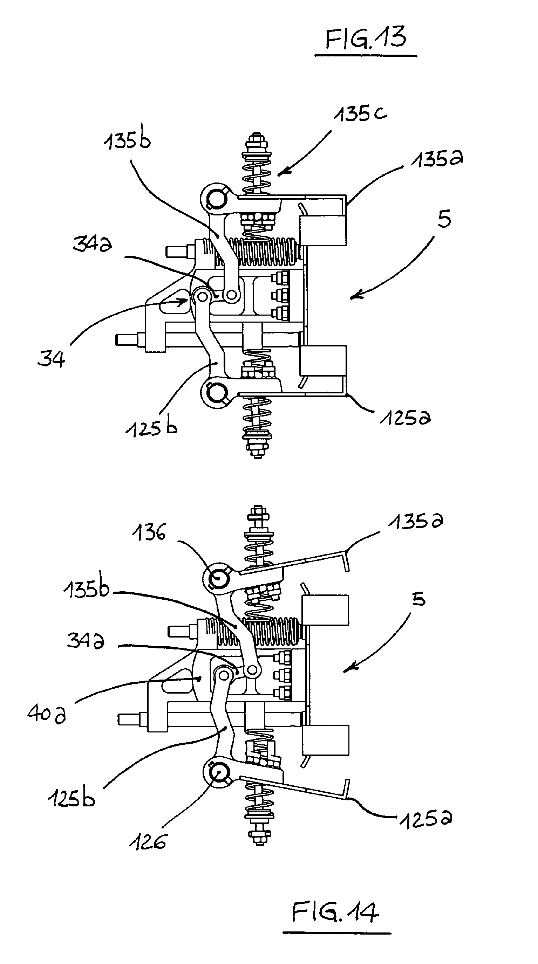

With specific reference to figures 13 to 17, each flap has a front operative portion having an angle section 125a, 135a suitable for holding the pouch inside the pocket when the flaps are in said operative pocket closing configuration.

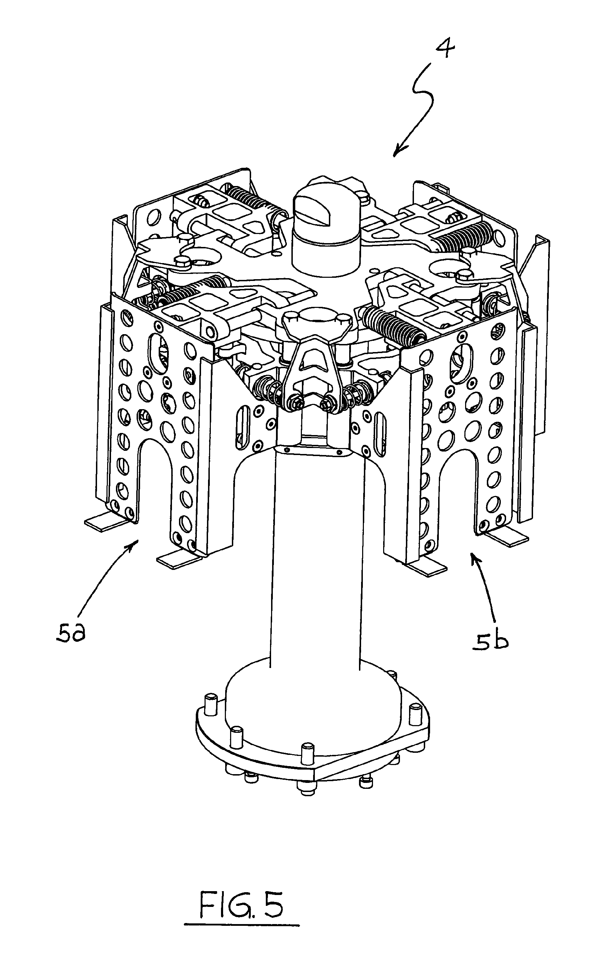

With particular reference to figures 4 and 5 and 15 to 17, the rear wall of the pocket can move in a direction radial to the rotary body 4, between a retracted operative position and a forward operative position (see for example pockets 5a and 5b in figures 4 and 5).

In order to enable the introduction of a pouch inside the pocket, each flap 125, 135 moves away from the base and rear walls, pivoting about respective vertical hinge pins 126 and 136. After the flaps have moved away, the pocket assumes the operative open position and can receive a pouch (figures 14 and 15).

Subsequently, the means for transferring a pouch from the magazine to the pocket come into operation and a pouch is thus introduced in the pocket and comes to rest in an upright position on the base walls.

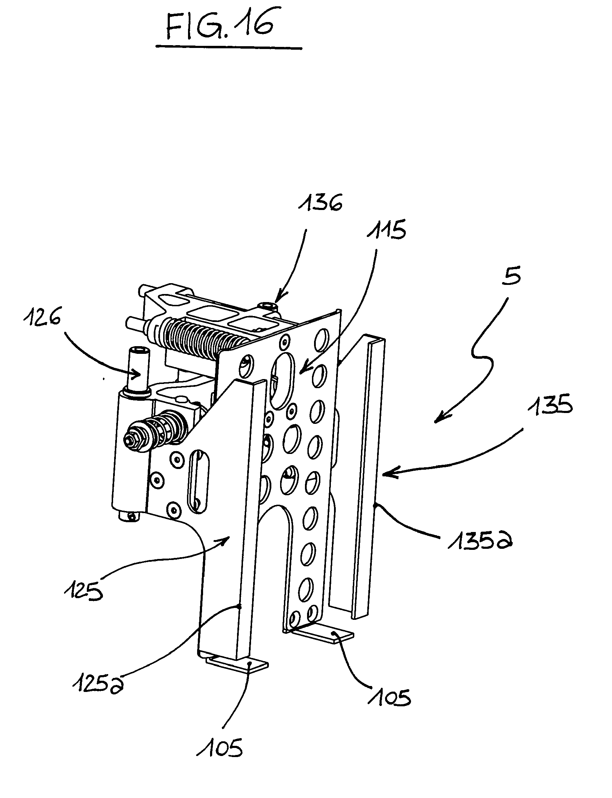

After the transfer of a pouch has taken place, the flaps 125 and 135 move back into position against the base and rear walls, again pivoting about the respective vertical hinge pins 126 and 136, but this time in the opposite direction. Once the flaps are back in position the pocket assumes the operative closed configuration and the angle section 125a, 135a of each flap holds the pouch inside the pocket (figures 13 and 16).

If the pouch introduced is not correctly centred in the pocket, at least one of the two flaps, abutting in the vicinity of the base and rear walls, will come into contact with a side edge of the pouch and push it laterally along the base wall(s). In this manner, the flaps act like feelers and are able to orient the pouch correctly inside the pocket.

Advantageously, therefore, the pocket is able to guarantee a correct vertical alignment and perfect horizontal centring of the pouches.

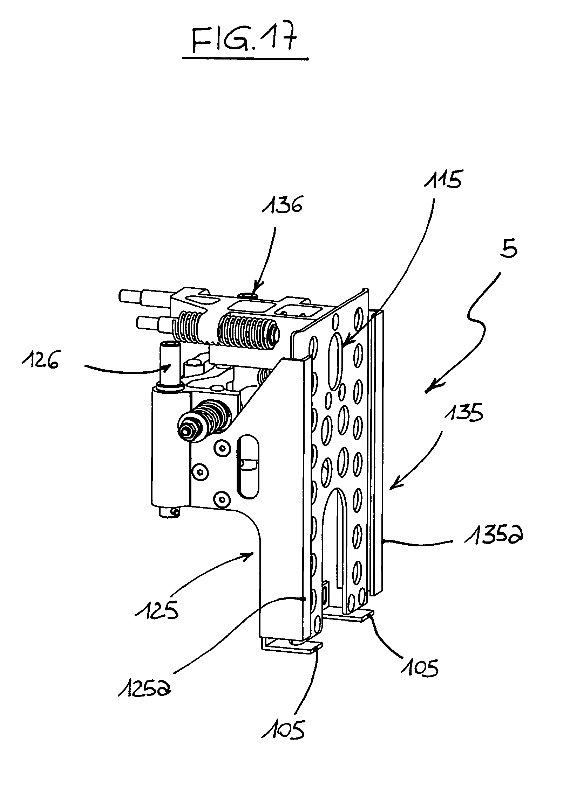

After the flaps have come to abut in the vicinity of the base and rear walls and have centred the pouch in the pocket, the rear wall of the pocket will move forward (figure 17) until the pouch is blocked between the rear wall itself and the front angle sections 125a and 135a of the flaps. In this manner, the pouch will be levelled in the plane defined by the rear wall of the pocket, which substantially coincides with the plane orthogonal to the direction of feed of the pouches on the magazine.

Preferably, the travel distance of the rear wall is around 20 millimetres.

Advantageously, the pocket is able to guarantee a position of the pouch that is coplanar with said reference orthogonal plane.

Summing up, therefore, the pocket of the rotary body orients and prepares the pouches so that they may be fed in the proper orientation to a handling unit or station.

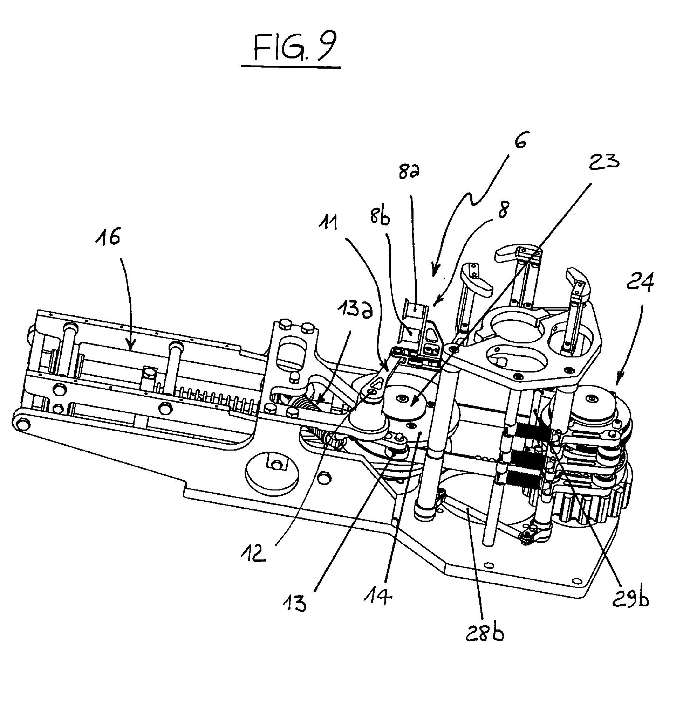

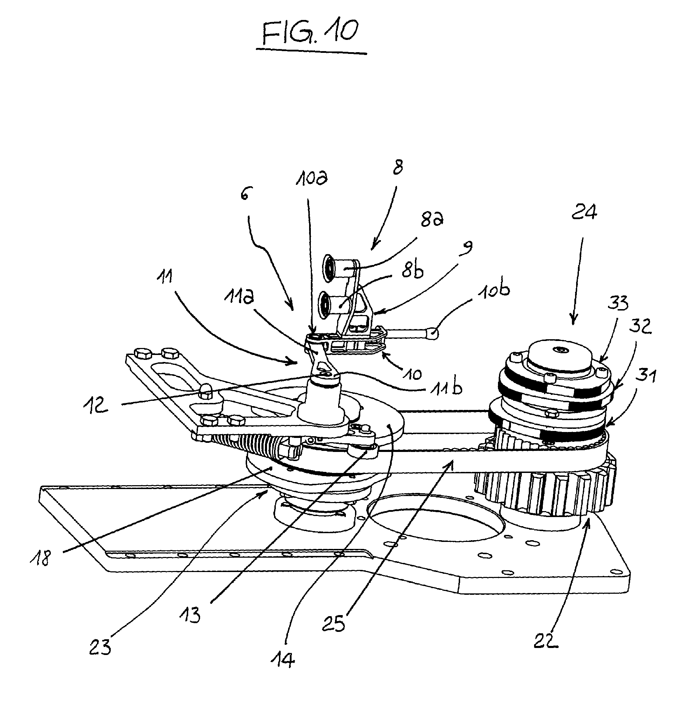

With particular reference to figures 9 and 10, the means 6 for transferring a pouch from the magazine 2 to a pocket 5 of the rotary body 4 comprise means 8 for gripping a pouch, which move with reciprocating motion between a position for picking up a pouch from the magazine and a position for feeding the same to a pocket of the rotary body.

Preferably, the gripper means comprise a pair of suction cups 8a and 8b, vertically aligned and connected to a supporting bracket 9.

The bracket 9 is integrally fixed on a slider 10 having a first end 10a connected to a first end 11a of a connecting rod 11 and a second end 10b slidingly inserted in a housing sleeve (not illustrated)..

A second end 11b of the connecting rod 11 is integrally connected to a pivot pin 12, which is in turn rigidly connected to a roller 13 driven by a first cam 14, which shall hereinafter be called "transfer means driving cam" for the sake of clarity of the description.

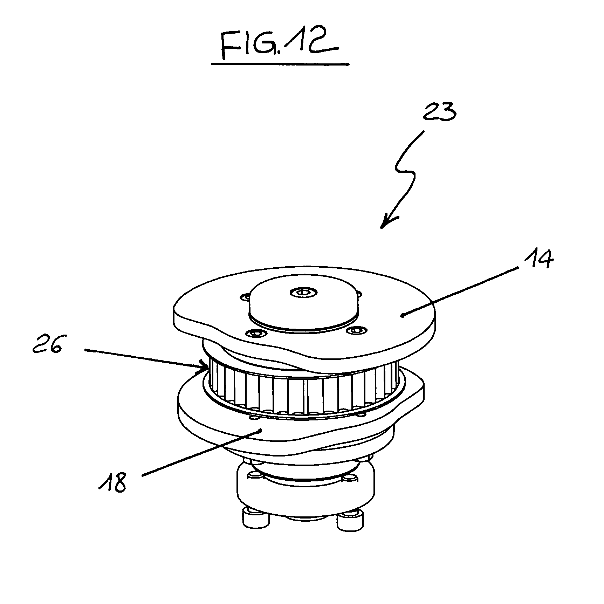

With particular reference to figure 12, the profile of the transfer means driving cam 14 is shaped so that the first end 11a of the connecting rod connected to the first end 10a of the slider moves with reciprocating motion along a circumference arc. It should be observed that, although said first end of the connecting rod moves along a circumference arc, the slider 10 moves with almost rectilinear, reciprocating translational motion, since the connecting rod has been dimensioned so as to be much longer than the travel distance of the slider.

Ultimately, the reciprocating motion of the connecting rod actuates the reciprocating motion of the slider, and hence of the suction cups 8a and 8b, between said operative position for picking up a pouch and said operative position for feeding the same to a pocket of the rotary body.

With particular reference to figure 3, the pouch magazine 2 comprises a loader 15, which moves with reciprocating translational motion between a rest position and an operative position for transferring the pouches onto the rotary body 4.

In particular, in the operative transfer position the loader is situated in a forward position, toward the rotary body 4, and this serves to reduce the distance that the transfer means must travel in order to pick up a pouch from the magazine. With reference to the illustrated example, the travel distance of the slider 10 is reduced thanks to the simultaneous forward movement of the loader 15 toward the rotary body and hence toward the transfer means.

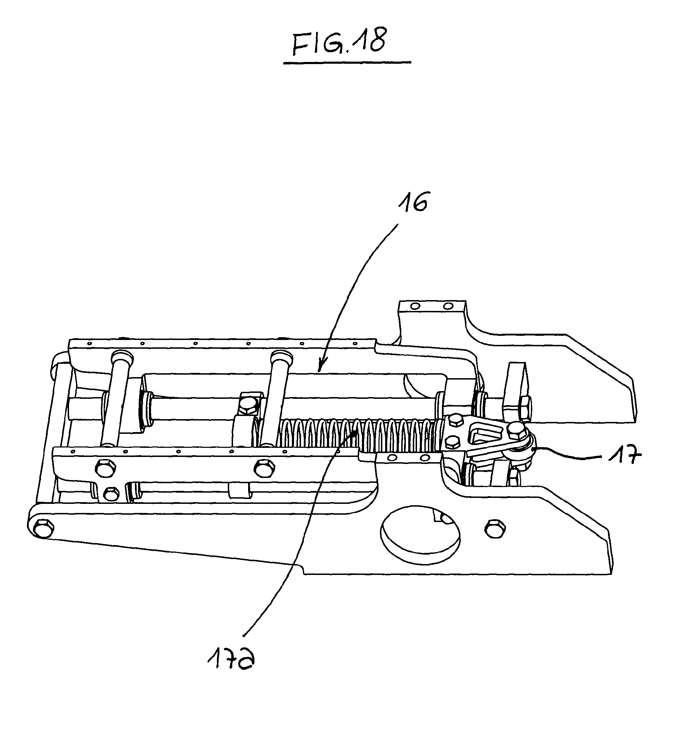

With specific reference to figures 9 and 18, the loader 15 is integrally fixed onto a slide 16, rigidly connected to which is a roller 17 driven by a second cam 18 (illustrated in figure 12), which shall hereinafter be called "magazine driving cam" for the sake of clarity of the description. The roller 17 is maintained in contact with the magazine driving cam 18, preferably by means of a helical spring 17a.

With particular reference to figure 12, the profile of the magazine driving cam 18 is shaped so that the loader will move with reciprocating translational motion.

Advantageously, the reciprocating translational motion (so-called "swinging") of the loader generates a beneficial "shaker" effect on the pouches contained in the magazine, thus helping, at least partially, to vertically align the pouches improperly packed by operator. Furthermore, the "shaker" effect enables air to be introduced between the pouches packed together, thereby facilitating the extraction thereof.

Preferably, the travel distance of the loader is around 15 millimetres.

The operation and, in particular, the movement of the device shall now be described.

First of all, there are preferably two sources of motion:
- a brushless motor 20 for driving the support shaft 7 of the rotary body 4 (see figures 3 and 6); in particular, the brushless motor 20 is connected to the support shaft 7 via a reduction gear 21, preferably of the 90° epicyclic type;
- a driving wheel 22, preferably a gear wheel (see in particular figures 1, 3, 10 and 11), which receives motion directly from the handling unit or station or from the welding starwheel.

With particular reference to figures 9 and 10, the movement of the device is preferably controlled with two gear assemblies 23 and 24, each comprising a plurality of gear mechanisms.

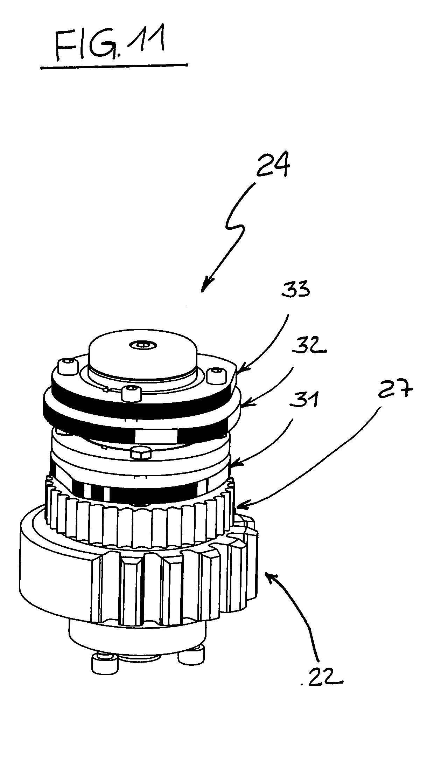

With reference to figures 10, 11 e 12, the first gear assembly 23 receives motion from the second gear assembly 24 via a belt 25, wrapped around a return pulley 26 of the first gear assembly and kinematically connected to a pulley 27 that is integral with the driving wheel 22 of the second gear assembly.

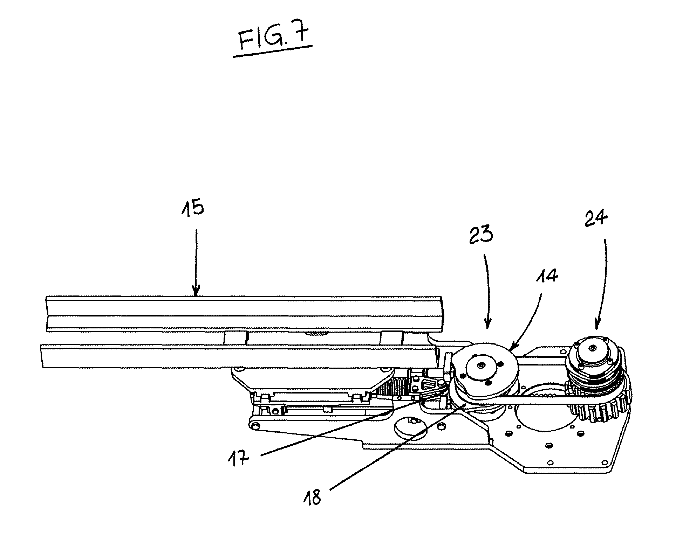

With specific reference to the preferred embodiment illustrated in figures 7, 10 and 12, both the transfer means driving cam 14 and the magazine driving cam 18 belong to the first gear assembly 23. In particular, said cams rotate integrally and have the same profile, but their phases are offset by an angle of around 90°.

The rotation of the first gear assembly 23 thus actuates both the movement of the pouch transfer means and the reciprocating translational movement ("swinging") of the loader 15.

More precisely, the transfer means driving cam 14 acts upon the roller 13 integrally connected to the connecting rod 11 (figure 10), whereas the magazine driving cam 18 acts upon the roller 17 (figure 7). The phase offset of approximately 90°, together with the cam profile itself, serves to actuate a relative movement of mutual convergence between the loader 15 and the transfer means, thereby advantageously cutting the respective travel distances in half. In fact, in the absence of a mutual convergence between the loader and the transfer means, one of them would have to cover a double travel distance, which would inevitably result in problems of inertia and consequent declines in productivity.

The roller 13 is maintained in contact with the transfer means driving cam 14, preferably by means of a helical spring 13a.

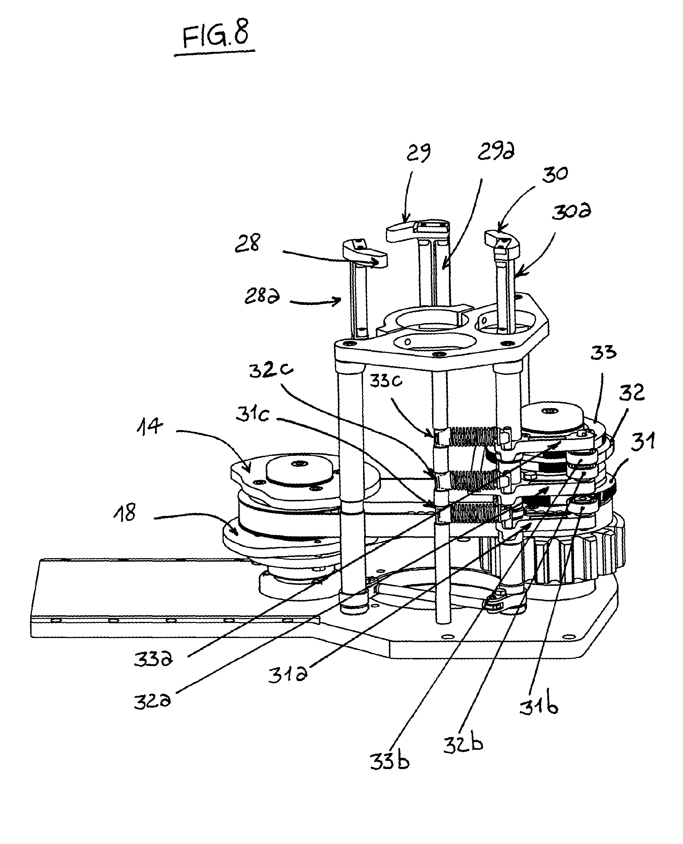

With particular reference to the preferred embodiment illustrated in figure 8, the second gear assembly 24 comprises three driving cams of three respective pushers suitable for moving the flaps 125 and 135 of the pockets 5 of the rotary body 4. More precisely, said pushers are organised as follows:
- a pusher 28 for actuating the opening of the flaps to permit the introduction of a pouch into a pocket;
- an optional pusher 29 suitable for actuating the movement of the flaps so as to ensure the horizontal centring of the pouch, after the latter has been introduced into the pocket and already preliminarily aligned by the closing movement of the flaps;
- a pusher 30 for actuating the opening of the flaps to permit the extraction of the pouch after the latter has been correctly oriented.

It should be observed that the flaps 125a and 135a are drawn back into position near the base and rear walls (figure 13) by return springs 125c and 135c.

Each pusher is preferably installed on vertical driving bars 28a, 29a and 30a.

With specific reference to figures 8, 10 and 11, the pushers are driven by the following cams:
- a cam 31 "to actuate flap opening for pouch introduction";
- an optional cam 32 "to drive the optional pusher";
- a cam 33 "to actuate flap opening for pouch extraction".

The presence of the optional pusher 29 renders the operation of horizontally centring the pouch inside the pocket redundant, thus preventing any malpositioning of the pouch during the rotation of the carousel 4.

It should be observed that the optional pusher represents a redundant feature of the device, since the closing movement of the flaps following the introduction of the pouch into the pocket is already sufficient to effect a correct horizontal centring of the pouch.

The optional pusher 29 acts upon the flaps 125a and 135a in such a manner as to cause the latter to open and close in an reciprocating fashion (figures 13 and 14) in order to "feel" the position of the pouch and if necessary push it laterally along the base wall(s), thus centring it inside the pocket.

The movement of the cams 31, 32 and 33 is transferred to the respective pushers by means of a plurality of actuators 31a, 32a and 33a provided with rollers 31b, 32b and 33b. In particular, the rollers are maintained in contact with the cams by means of a plurality of elastic elements, preferably helical springs 31c, 32c and 33c.

In the preferred embodiment illustrated in figure 9, the actuators 31 a and 32a, associated respectively with the cam 31, "which actuates flap opening for pouch introduction", and cam 32, "which actuates the optional pusher", actuate the movement of the pushers 28 and 29 by means of transmission rods 28b and 29b.

The actuator 33a associated with cam 33, "which actuates flap opening for pouch extraction", is on the contrary directly connected to the vertical bar 30a of the pusher 30 which opens the flaps for extraction of the pouch.

With particular reference to figures 13 and 14, the movement of the flaps 125 and 135 is actuated by contact of the pushers with a lever mechanism 34. In particular, said crank mechanism consists of a pair of levers 125b and 135b, which are integrally connected to the respective flaps 125 and 135 and mutually connected by means of a connecting rod 34a.

Each pusher, in turn, exerts a force on said connecting rod 34a, provoking a rototranslational movement thereof (figure 14). This movement induces a rotation of the levers 125b and 135b, and hence of the flaps 125 and 135, about the vertical hinge pins 126 and 136, thereby causing the pockets 5 of the rotary body 4 to open.

With reference to figures 6 and 14, the forward and backward movement of the rear wall 115 of the pocket is driven by a cam 40 which is integral with the housing 7a of the support shaft 7 of the carousel and operatively active on a slider 40a rigidly connected to said rear wall.

The brushless motor is timed by means of an electronic cam to operate in phase with the first and the second gear assemblies 23 and 24. In particular, each gear assembly 23, 24 and the brushless motor are set in such a manner that, for each pouch processed, the complex of gear wheels of the gear assemblies 23 and 24 and the "electronic cam" of the brushless motor make a complete revolution.

The rotary body 4 moves in a discrete manner, since it must stop to permit the transfer of the pouch from the magazine to a pocket. In particular, the pushers 28, 29 and 30 are active when the rotary body 4 is stationary, while they themselves are stationary when the rotary body moves following the transfer of a pouch into a pocket. Therefore, the electronic part (brushless motor) of the device's drive system is active when the mechanical part (gear assemblies) is inactive.

In short, the normal operation of the device is as follows:

The carousel rotates by 90° around a vertical axis passing through the support shaft 7 so as to position a first empty pocket 5 in front of the magazine 2.

As soon as the carousel stops rotating, the pusher 28 opens the flaps to enable the introduction of a pouch into the pocket.

Simultaneously, the pouch magazine and transfer means mutually converge in order to permit a pouch to be picked up and subsequently fed to the carousel.

After the picked up pouch has been introduced into the pocket, the pusher 28 disengages itself from the flaps and the return springs draw the flaps 125 and 135 back into position near the base and rear walls, thus closing the pocket and centring the pouch.

The carousel then makes a 90° step and stops to allow the positioning of a second empty pocket in front of the magazine. After the carousel has stopped, the optional pusher 29 acts on the flaps 125 and 135 of the first pocket, causing them to open and close rapidly in order to "feel" the position of the pouch and guarantee the horizontal centring thereof. Preferably, the optional pusher actuates two flap opening/closing cycles.

Subsequently, the carousel makes a further 90° step and stops to allow the positioning of a third empty pocket in front of the magazine.

During the further 90° step of the carousel, the cam 40 integral with the housing 7a of the support shaft 7 actuates the forward movement of the rear wall 115 of the first pocket. In this manner, the pouch inserted in the first pocket remains blocked between the rear wall and the front angle sections 125a and 135a of the flaps, and is levelled in the plane defined by the rear wall. This plane coincides with the plane orthogonal to the direction of feed of the pouches on the magazine.

After the carousel has stopped, the pusher 30 actuates the opening of the flaps of the first pocket to enable extraction of the pouch, now correctly oriented. Simultaneously, the optional pusher 29 acts on the flaps of the second pocket, causing them to open and close rapidly in order to "feel" the position of the pouch inserted in the second pocket and thus guarantee the horizontal centring thereof.

Advantageously, a device according to the invention overcomes a technical problem particularly felt within the sector and not yet resolved, i.e. the technical problem of picking up pouches from a magazine, aligning them and feeding them with precision to a handling unit or to a welding starwheel.

Another advantage of a device according to the invention is that it can be installed on already existing welding starwheels.

Advantageously, a device according to the invention is able to guarantee high system productivity. In fact, the productivity losses due to incorrect alignment may be estimated as approximately 5% of the pouches processed and

considering that present machines are capable of processing around 240 pouches per minute, this means that, in the absence of a device according to the invention, present machines would suffer losses at a rate of around 10 pouches per minute.

A further advantage of the present invention is that it is reliable and economical to produce.

## Claims

1. Device (1) for aligning pouches and similar, **characterised in that** it comprises:
a magazine (2) for the pouches;
a rotary body (4) provided with at least one pocket (5) suitable for receiving and
containing a pouch, said rotary body being mobile between a first operative position, in which the pocket abuts against the magazine to receive a pouch, and
a second operative position, in which the pocket abuts against an external handling station so that the pouch can be transferred to said handling station, said pocket (5) being configured so as to orient the pouch in a prefixed direction and plane;
means (6) for transferring a pouch from the magazine (2) to a pocket (5) of the rotary body (4).

2. Device according to claim 1, wherein said pocket (5) is defined by a plurality of retaining walls (105, 115, 125, 135) suitable for perimetrically enclosing the pouch so as to orient it in a prefixed direction and plane.

3. Device according to claim 2, wherein said plurality of walls comprises at least:
a base wall (105);
a rear wall (115);
a pair of side walls (125, 135).

4. Device according to claim 3, wherein said side walls (125, 135) are mobile between an operative configuration for opening the pocket (5), in which they position themselves away from the base wall (105) and rear (115) wall, and an operative configuration for closing the pocket (5), in which they abut next to the base and rear walls, so that at least one of said side walls comes into contact with an edge of the pouch so as to align it inside the pocket and prepare it for a subsequent handling station.

5. Device according to any of the claims 3 or 4, comprising a pair of horizontally aligned brackets suitable for defining corresponding base walls (105).

6. Device according to any of the claims 3 to 5, wherein said rear wall (115) of the pocket (5) can move in a direction radial to the rotary body (4) between a retracted operative position and a forward operative position, said rear wall defining a surface for the pouch to rest against and having the same spatial orientation of a corresponding forward feed plane of the pouches on the magazine (2), so that the pouch assumes an orientation coplanar with said forward feed plane.

7. Device according to claim 6, wherein said rear wall (115) comprises a perforated plate.

8. Device according to any of the claims 4 to 7, wherein the side walls (125, 135) present at least one front operative portion having an angle section (125a, 135a) suitable for holding a pouch inside the pocket (5) when said side walls are in the operative configuration for closing the pocket itself.

9. Device according to any of the preceding claims, wherein said means (6) for transferring a pouch are interposed between the magazine (2) and the rotary body (4).

10. Device according to any of the preceding claims, wherein said means (6) for transferring a pouch comprise pouch gripping means (8) which move with reciprocating motion between a position for picking up a pouch from the magazine (2) and a position for feeding the same to a pocket (5) of the rotary body (4).

11. Device according to claim 10, wherein said pouch gripping means (8) comprise:
a support bracket (9) designed to move with reciprocating motion;
a pair of suction cups (8a, 8b) aligned along a vertical direction and integrally fixed on said bracket, said suction cups being operatively active on a pouch.

12. Device according to any of the preceding claims, wherein said magazine (2) is fixed on a loader (15) designed to move with reciprocating translational motion between a rest position and an operative position for transferring the pouches onto the rotary body (4), the loader (15) being located, in said operative position for transferring the pouches, in a forward position toward the rotary body (4).

13. Device according to any of the preceding claims, wherein the rotary body (4) comprises a carousel integrally keyed onto a support shaft (7) and provided with a plurality of pockets (5) disposed in diametrically opposite positions relative to said support shaft.

14. Device according to claim 13, wherein said pockets (5) are four in number and disposed at an angular distance of around 90° from each other along the perimeter of the carousel.

15. Machine for handling pouches and similar, **characterised in that** it comprises a device for aligning pouches according to any of the preceding claims.

## Amended claims

### Amended claims in accordance with Rule 137(2) EPC.

**1.** Device (1) for aligning pouches and similar, comprising:
a magazine (2) for the pouches;
a rotary body (4) for receiving the pouches, mobile between a first and a second operative position,
**characterised in that** said rotary body (4) is provided with at least one pocket (5) suitable for receiving and containing a pouch, said rotary body being mobile between said first operative position, in which the pocket abuts against the magazine to receive a pouch, and said second operative position, in which the pocket abuts against an external handling station so that the pouch can be transferred to said handling station, said pocket (5) being configured so as to orient the pouch in a prefixed direction and plane;
means (6) for transferring a pouch from the magazine (2) to a pocket (5) of the rotary body (4).

**2.** Device according to claim 1, wherein said pocket (5) is defined by a plurality of retaining walls (105, 115, 125, 135) suitable for perimetrically enclosing the pouch so as to orient it in a prefixed direction and plane.

**3.** Device according to claim 2, wherein said plurality of walls comprises at least:
a base wall (105);
a rear wall (115);
a pair of side walls (125, 135).

**4.** Device according to claim 3, wherein said side walls (125, 135) are mobile between an operative configuration for opening the pocket (5), in which they position themselves away from the base wall (105) and rear (115) wall, and an operative configuration for closing the pocket (5), in which they abut next to the base and rear walls, so that at least one of said side walls comes into contact with an edge of the pouch so as to align it inside the pocket and prepare it for a subsequent handling station.

**5.** Device according to any of the claims 3 or 4, comprising a pair of horizontally aligned brackets suitable for defining corresponding base walls (105).

**6.** Device according to any of the claims 3 to 5, wherein said rear wall (115) of the pocket (5) can move in a direction radial to the rotary body (4) between a retracted operative position and a forward operative position, said rear wall defining a surface for the pouch to rest against and having the same spatial orientation of a corresponding forward feed plane of the pouches on the magazine (2), so that the pouch assumes an orientation coplanar with said forward feed plane.

**7.** Device according to claim 6, wherein said rear wall (115) comprises a perforated plate.

**8.** Device according to any of the claims 4 to 7, wherein the side walls (125, 135) present at least one front operative portion having an angle section (125a, 135a) suitable for holding a pouch inside the pocket (5) when said side walls are in the operative configuration for closing the pocket itself.

**9.** Device according to any of the preceding claims, wherein said means (6) for transferring a pouch are interposed between the magazine (2) and the rotary body (4).

**10.** Device according to any of the preceding claims, wherein said means (6) for transferring a pouch comprise pouch gripping means (8) which move with reciprocating motion between a position for picking up a pouch from the magazine (2) and a position for feeding the same to a pocket (5) of the rotary body (4).

**11.** Device according to claim 10, wherein said pouch gripping means (8) comprise:
a support bracket (9) designed to move with reciprocating motion;
a pair of suction cups (8a, 8b) aligned along a vertical direction and integrally fixed on said bracket, said suction cups being operatively active on a pouch.

**12.** Device according to any of the preceding claims, wherein said magazine (2) is fixed on a loader (15) designed to move with reciprocating translational motion between a rest position and an operative position for transferring the pouches onto the rotary body (4), the loader (15) being located, in said operative position for transferring the pouches, in a forward position toward the rotary body (4).

**13.** Device according to any of the preceding claims, wherein the rotary body (4) comprises a carousel integrally keyed onto a support shaft (7) and provided with a plurality of pockets (5) disposed in diametrically opposite positions relative to said support shaft.

**14.** Device according to claim 13, wherein said pockets (5) are four in number and disposed at an angular distance of around 90° from each other along the perimeter of the carousel.

**15.** Machine for handling pouches and similar, **characterised in that** it comprises a device for aligning pouches according to any of the preceding claims.
